# FASCICULE DE BREVET EUROPEEN

(11) **EP 1 046 367 B1**
(45) Date de publication et mention de la délivrance du brevet: **12.11.2003**
(21) Numéro de dépôt: 00420075.4
(22) Date de dépôt: 14.04.2000
(51) Int. Cl.: A47J 31/54

(54) **Corps de chauffe de cafetière à base de profile**
Heizkörper für eine Espresso-Kaffeemaschine
Heating unit for expresso coffee machine

(30) Priorité: 20.04.1999 FR 9905144
(43) Date de publication de la demande: 25.10.2000
(73) Titulaire: SEB S.A., 69130 Ecully (FR)
(72) Inventeur: Bonneville, Jean-Francois, 69400 Limas (FR); Ligneau, Vincent, 69780 Mions (FR)

(56) Documents cités:
- FR-A- 1 065 256
- FR-A- 2 180 851
- US-A- 4 334 141
- US-A- 4 371 777
- US-A- 5 724 478

## Description

La présente invention concerne un chauffe eau instantané pour cafetières expresso à pression.

Dans ce type de cafetière, l'eau d'un réservoir est pompée, circule dans un échangeur où elle s'échauffe, puis elle est forcée éventuellement via un distributeur à travers un filtre contenant la mouture dont elle extrait les arômes. Suivant le tassage et le type de mouture utilisée, la pression s'élève plus ou moins, pouvant atteindre en cas de blocage le maximum de la pompe délivrant alors un débit nul. Aussi, les liaisons et les étanchéités nombreuses entre la pompe, l'échangeur, et le filtre, doivent supporter des efforts importants et être très soignées.

L'échangeur reçoit le plus souvent la chaleur d'un tube chauffant. La chaleur est transmise à l'eau le long de canaux parallèles adjacents assez longs et coupés pour des raisons de fabrication par un plan de joint ou la pression s'exerce. De ce fait l'échangeur est souvent une pièce solide, ramassée et assez massive ce qui induit des temps de chauffe assez longs qui, bien qu'acceptés, n'en sont pas moins gênants.

Afin de résister naturellement à la pression et pour un bon échange thermique, il est souhaitable que le corps de l'échangeur soit en un seul bloc, sans qu'un plan de joint traverse les canaux de chauffage de l'eau. Le brevet FR2180851 décrit de tels échangeurs où le corps de chauffe est un profilé d'une seule pièce composé d'un tube véhiculant l'eau accolé à un tube chauffant, les deux tubes étant en relation thermique. Une version décrite dans le brevet cité montre le tube d'eau qui entoure le tube chauffant, favorisant l'échange thermique.

Cependant les liaisons d'entrée et de sortie d'eau d'un tel échangeur avec les autres organes de l'appareil sont difficiles car nécessitent une étanchéité double : près du tube chauffant central et sur la périphérie du tube d'eau. Il est en particulier difficile d'utiliser pour l'entrée et la sortie d'eau des durites ou des embouts, tels qu'ils peuvent être décrits par exemple dans le brevet DE2942523, et qui sont par ailleurs encombrants et sources de fuites.

Le brevet DE2942523 enseigne un aller retour du circuit d'eau le long du tube chauffant, favorisant l'échange thermique parce que, à encombrement égal, la vitesse de l'eau à chauffer augmente et est mieux répartie, et parce que la température de l'échangeur est plus homogène. Le retour de l'eau passant d'un canal à l'autre en bout du profilé est obtenu par une coupelle oblongue, peu commode à réaliser, qui nécessite en outre un usinage en creux de l'extrémité du profilé. De plus à la lecture de ce document, l'application à plusieurs canaux autour du tube impliquerait plusieurs coupelles oblongues, alors arquées, et des usinages complexes, d'où un coût accru et une diminution de la fiabilité.

Le brevet FR2180851 stipule que le tube chauffant n'est pas inséré ni assemblé mais réalisé dans le profilé. Ceci exclut l'utilisation de tubes chauffants rapportés, commercialisés par des fabricants spécialisés dans la réalisation économique de ces composants.

Les brevets DE2942523 et DE3112651 illustrent un ou plusieurs tubes électriques chauffants insérés et sertis dans une rainure ouverte longitudinale périphérique du profilé. Mais ces documents occultent les difficultés potentielles d'un agencement et d'une fixation au centre d'un profilé notamment quant au mode d'insertion d'un élément de liaison.

Dans ce qui suit on désigne par corps de chauffe un sous-ensemble comprenant un élément chauffant, un échangeur thermique avec l'eau à chauffer, et les pièces de raccordement de l'échangeur avec le reste de l'appareil. On entend par canal un conduit de section droite fermée formant un tube de conduction d'eau.

L'invention qui suit a pour objet un corps de chauffe pour cafetière à pression qui soit compact, de faible coût, de fiabilité améliorée par la réduction du nombre de pièces intermédiaires et du nombre des étanchéités, et qui présente des échanges thermiques améliorés pour assurer une bonne maîtrise de la température de sortie d'eau et de l'entartrage.

Le but de l'invention est atteint par un corps de chauffe, au sein d'un circuit hydraulique pour cafetière expresso, comprenant un élément chauffant longitudinal, un circuit d'eau comportant un profilé extrudé formant une pluralité de canaux parallèles adjacents en relation thermique avec l'élément chauffant, du fait que les canaux sont répartis autour de l'axe longitudinal médian du profilé, coaxial à celui de l'élément chauffant et du fait que chaque extrémité du profilé est fermée par un flasque, la face interne de chaque flasque comportant des chemins pour relier les canaux entre eux, et assurant les entrée et sortie d'eau dans le profilé, et du fait que l'un au moins des flasques comporte ou supporte un autre organe du circuit hydraulique tel que le corps d'un distributeur ou une pompe de la cafetière qu'il relie à au moins l'un des canaux du profilé.

Cette disposition permet de minimiser le nombre des étanchéités et des pièces nécessaires au corps de chauffe et à la cafetière, les pièces faisant office de flasques ayant justement des fonctions de liaison et de corps ou de support de composants du circuit d'eau de la cafetière. Par exemple, le profilé étant vertical, le flasque inférieur peut relier la sortie de la pompe à l'un des canaux, tout en supportant la pompe pour une part de son poids. Des chemins ménagés dans le flasque permettent de relier différents canaux entre eux par leur extrémité. L'utilisation d'un profilé extrudé de préférence en aluminium permet d'obtenir facilement les canaux d'eau, de les répartir a proximité de l'élément chauffant en optimisant les masses de métal, et d'assurer une liaison thermique entre les canaux et avec l'élément chauffant. Cette liaison est favorable à l'homogénéisation des températures dans une section de l'échangeur ce qui rend moins critique le positionnement d'un capteur de régulation en température.

De préférence le circuit d'eau dans le profilé comporte au moins un canal où l'eau à chauffer circule à proximité de l'élément chauffant d'une première extrémité vers une deuxième extrémité et au moins un canal où l'eau circule à l'inverse d'une deuxième extrémité vers une première extrémité, les deux canaux étant reliés par le chemin d'un flasque à l'une des extrémités.

De préférence les canaux où la circulation de l'eau est de sens contraire se côtoient.

La proximité des canaux permet un échange thermique entre eux ce qui moyenne les températures de l'échangeur entre les deux extrémités. On facilite ainsi le positionnement du capteur de régulation, et on évite les surchauffes de l'eau qui provoqueraient des entartrages localisés.

De préférence les chemins des flasques reliant les extrémités des canaux du profilé sont en arc de cercle centré sur l'axe médian du profilé.

Cette disposition permet de relier aisément au moins deux canaux adjacents du profilé et d'assurer au besoin leur mise en série hydraulique avec un changement de sens de l'écoulement dans le profilé. Elle permet également de relier les extrémités de un ou plusieurs canaux du profilé et de collecter ou distribuer le débit d'eau.

De préférence les flasques comportent une surface de fond plane et les chemins sont entourés d'une nervure en saillie de cette surface, laquelle nervure retient un joint s'appliquant d'une part sur la surface plane et d'autre part sur l'extrémité du profilé.

En alternative les chemins sont ménagés dans l'épaisseur d'un flasque à partir d'une face interne plane.

Eventuellement le joint comporte deux pièces, l'une assure l'étanchéité entre les chemins et le centre de la pièce, l'autre assure l'étanchéité entre les chemins et l'extérieur. L'étanchéité d'un chemin du flasque à l'autre n'est alors assurée que par le plaquage des nervures entourant les chemins du flasque sur l'extrémité du profilé, ce qui est admissible car une éventuelle fuite entre les chemins resterait faible devant le débit principal et n'aurait pas de conséquences.

De préférence les flasques sont serrés sur l'extrémité du profilé par des tirants ou des vis logés dans des trous ou des passages extrudés du profilé.

On peut en particulier utiliser des vis auto taraudeuses qui se fixent dans l'extrémité ou les extrémités de passages longitudinaux du profilé. L'extrémité du profilé peut rester plane et éventuellement brute d'une coupe soignée. Il n'y a pas lieu de prévoir de perçages ni un quelconque usinage du profilé pour assurer la fixation des flasques d'extrémité.

De préférence le profilé comporte une rainure externe extrudée ou une forme externe complémentaire à une rainure sur laquelle sont fixés d'autres éléments de la cafetière.

Cette caractéristique permet de fixer commodément des éléments de la cafetière proches du corps de chauffe, par exemple la pompe ou/et le porte filtre et éventuellement de fixer le corps de chauffe dans la cafetière.

De préférence l'un des flasques comprend le corps d'un distributeur reliant le circuit de l'eau à l'utilisation ou à la purge.

L'utilisation est le plus souvent le porte filtre et le filtre contenant la mouture. On a ainsi un nombre de pièces et de joints minimal et on peut réaliser un sous ensemble très compact.

De préférence le flasque inférieur relie la sortie d'eau de la pompe aux canaux d'eau du profilé.

On évite ainsi toute durite intermédiaire et on limite le nombre d'étanchéités à assurer, tout en ayant un ensemble très compact.

Dans une version, le profilé comprend un canal de section fermée, excentré par rapport à l'élément chauffant et parcouru par de l'eau froide peu ou pas réchauffée pendant son passage.

Par exemple si la cafetière comprend en partie supérieure un vérin hydraulique de compression de la mouture, ce vérin peut facilement être alimenté par l'eau de la pompe située en bas de la cafetière sans que cette eau soit inutilement réchauffée et sans nécessiter de conduite supplémentaire.

L'excentration vis à vis de l'élément chauffant évite à l'eau de trop se réchauffer avant d'atteindre le vérin. L'eau est dirigée dans le distributeur vers le vérin ou la purge sans que d'autres composants soient ajoutés.

De préférence l'élément chauffant est un tube chauffant électrique assemblé dans un logement agencé sur l'axe médian du profilé, chaque flasque présentant une ouverture traversante pour l'extrémité correspondante du tube chauffant.

On peut ainsi utiliser un composant commercialement disponible. La liaison thermique avec les canaux répartis autour de l'axe est assurée dans les meilleures conditions de distance, c'est à dire au plus près.

De préférence l'élément chauffant est brasé sur le profilé.

Les jeux éventuels entre le tube chauffant et le profilé sont supprimés et la liaison thermique est parfaitement assurée. Bien qu'on ait pu utiliser une colle ou une graisse thermique ou une résine, la brasure a l'avantage de permettre une fixation plus solide et plus éprouvée donc plus fiable.

Dans une version le tube chauffant est logé dans un passage central du profilé partiellement ouvert sur la longueur du profilé.

La section du passage dans le profilé est ajustée à celle du tube et l'ouverture ou la fente permet d'introduire la brasure afin qu'elle s'écoule autour du tube pendant l'assemblage au four. De préférence la quantité de brasure sera suffisante pour combler partiellement l'ouverture.

Dans une autre version la section du passage contenant l'élément chauffant est fermée et comporte au moins une alvéole permettant l'introduction d'un fil de brasure à la fabrication.

La réalisation de l'assemblage est très simplifiée: il suffit d'introduire l'élément chauffant tubulaire et le fil de brasure dans leurs logements et de porter le tout à la température de brasage.

Dans une autre version l'élément chauffant est une couche électriquement résistive épaisse ou mince déposée à la périphérie et le long du profilé sur une couche électriquement isolante.

Les canaux du profilé peuvent être constitués de plusieurs passages hydrauliquement en parallèle au moins sur une partie du circuit de chauffage.

Cela permet de faire des allers-retours en répartissant l'eau tout autour de l'axe du profilé, même si le profilé ne présente pas un nombre de passages rigoureusement compatible avec le nombre d'allers-retours du circuit d'eau.

Le corps de chauffe comporte un thermostat ou un capteur de température pour assurer sa régulation.

L'invention est illustrée par les exemples de réalisation détaillés ci après et les dessins annexés.
La figure 1 est une vue d'ensemble de côté d'un corps de chauffe de cafetière avec les organes qui lui sont attachés tels que pompe, vérin, support de filtre et filtre.
La figure 2 est une vue du profilé avec un élément chauffant tubulaire brasé, comportant une fente pour introduire la brasure.
La figure 3 est une vue d'un profilé avec un élément chauffant tubulaire brasé où la brasure est introduite dans des alvéoles.
La figure 4 est une vue d'un profilé comportant un élément chauffant en couche résistive.
La figure 5 est une vue de dessus du flasque inférieur.
La figure 6 est une vue en coupe de côté du flasque supérieur et des pièces du distributeur dont il fait partie.

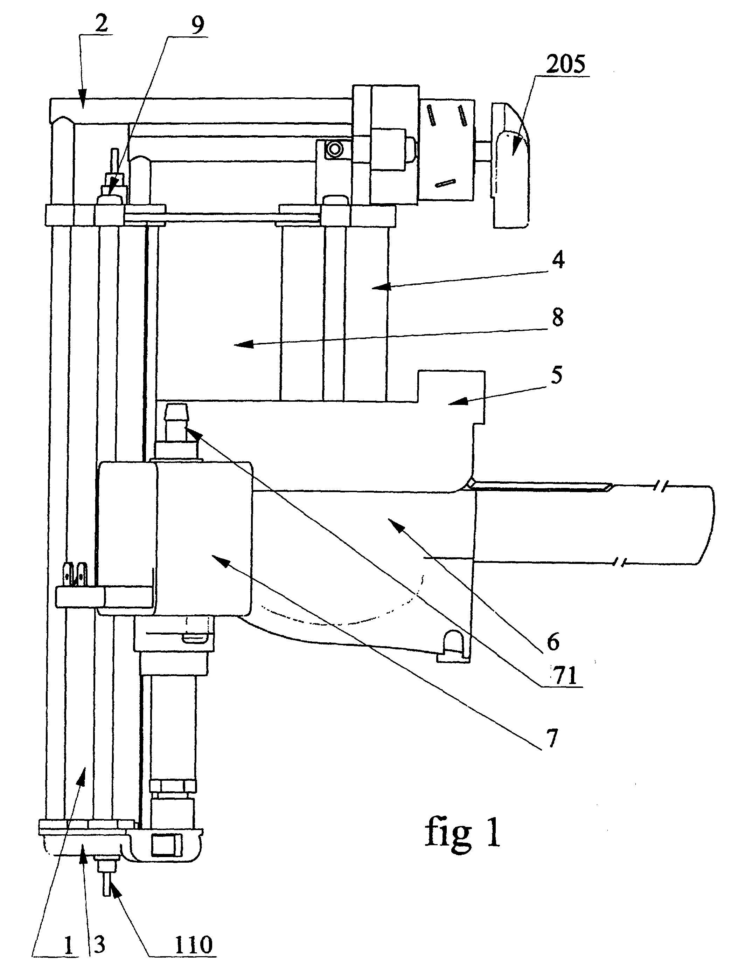

Dans une réalisation préférentielle illustrée sur la figure 1 la cafetière comporte un corps de chauffe constitué d'un profilé vertical 1 en aluminium extrudé, fermé à son extrémité supérieure par un flasque 2 et à son extrémité inférieure par un flasque 3. Un élément chauffant tubulaire 110 est disposé au centre du profilé 1.

La mouture de café est disposée dans un filtre dont le porte filtre 6 est supporté par une pièce 5 elle même fixée sur le corps d'un vérin 4 de tassage de la mouture, comportant une toile 8, lequel vérin est fixé d'une part contre le flasque distributeur 2 , et d'autre part sur le profilé 1 par la toile 8. La sortie d'une pompe 7 est emboîtée dans le flasque inférieur 3.

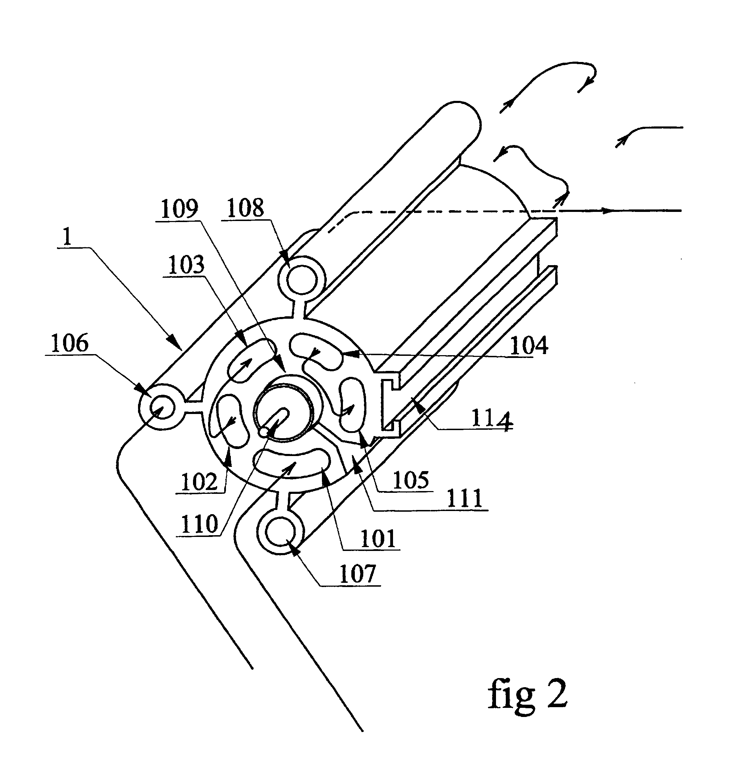

Le profilé extrudé 1 comme illustré sur la figure 2 de forme principale cylindrique comporte sur son axe un passage 109 qui reçoit le tube chauffant 110. Une fente longitudinale 111 ouvre partiellement le passage 109. Cette fente reçoit à la fabrication la brasure qui, en fondant, entoure le tube et assure sa liaison thermique avec le profilé. De préférence la brasure est en quantité suffisante pour combler partiellement la fente 111 et relier ses deux bords.

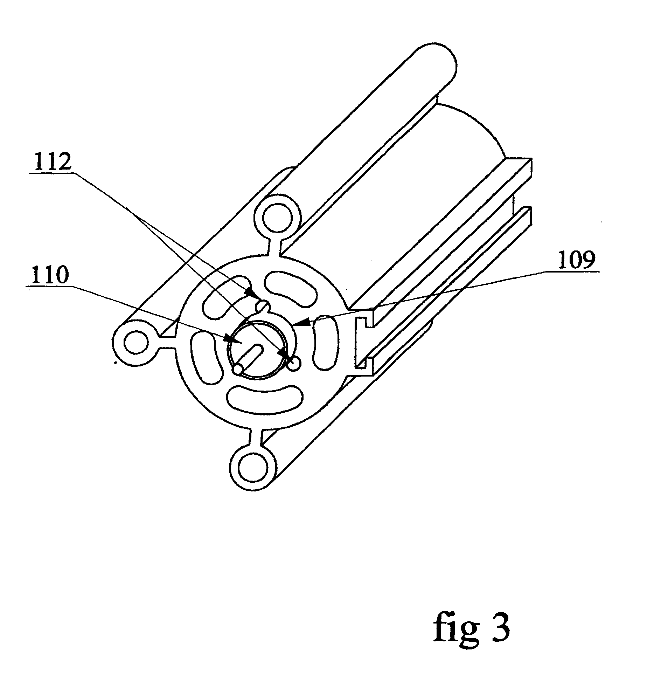

Dans une autre version illustrée sur la figure 3, le profilé extrudé 1 de forme principale cylindrique comporte sur son axe un passage 109 qui reçoit le tube chauffant 110. Des passages alvéolaires 112 répartis autour du passage 109 et débouchant dans ce passage permettent à la fabrication du corps de chauffe d'introduire des fils de brasure laquelle, en fondant, se répartit dans le jeu laissé entre le tube chauffant 110 et son passage 109.

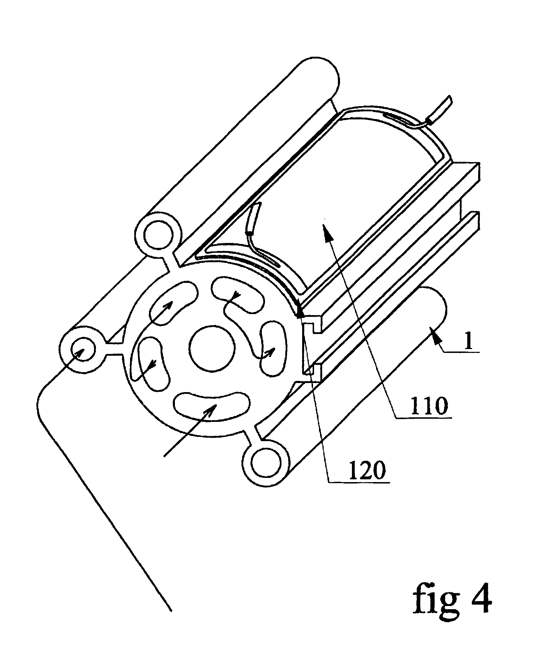

Dans une autre version illustrée sur la figure 4, le profilé extrudé 1 de forme principale cylindrique reçoit sur chaque partie externe de la forme cylindrique une couche isolante 120, et par dessus cette couche isolante une couche conductrice résistive 110 connectée électriquement à chaque extrémité. L'élément chauffant sensiblement cylindrique ainsi constitué est réparti au plus près des canaux, en étant coaxial à l'axe médian du profilé extrudé

Le profilé comporte des passages à section fermée 101-105 comme illustré sur la figure 2, répartis autour de l'axe médian du profilé, qui sont destinés au circuit de l'eau à réchauffer et qui constituent autant de canaux. L'eau entre par une extrémité du passage 101 proche de la fente 111, ressort à l'autre extrémité en longeant le tube chauffant. Elle revient ensuite par le passage 102 contigu au précédent en s'écoulant en sens inverse, faisant un aller retour. Puis elle repart dans le passage 103 contigu au passage 102 et ainsi de suite.

La disposition décrite comporte un nombre de passages d'eau impair, ce qui permet de faire entrer l'eau à une extrémité du profilé par le flasque inférieur et de la faire sortir réchauffée en fin de parcours à l'autre extrémité par le flasque supérieur, tout le débit d'eau passant dans chaque passage ou canal. On peut trouver avantage dans d'autres versions, pour des raisons d'entartrage par exemple, à faire passer le débit d'eau en parallèle dans deux, voire plusieurs passages du profilé. Le canal conduisant le débit d'eau dans un sens est alors constitué par plusieurs passages du profilé.

On peut également envisager le cas d'une chaudière dont l'entrée et la sortie sont ménagées dans le même flasque supérieur ou inférieur.

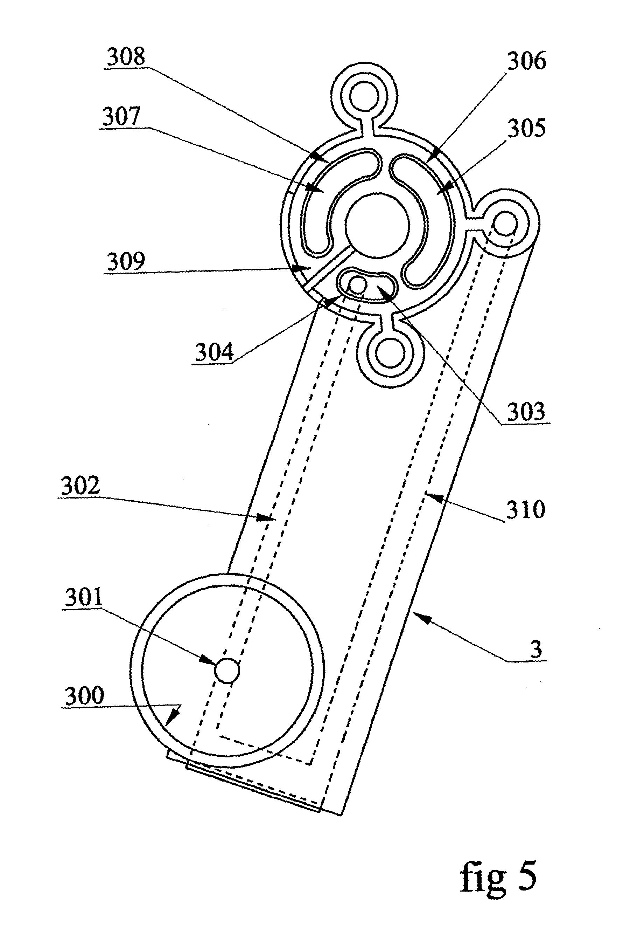

Le flasque inférieur 3 illustré sur la figure 5 comporte un logement 300 qui reçoit l'embout de sortie d'eau de la pompe 7. L'eau pénètre dans un conduit 302 du flasque par un orifice 301 et se trouve dirigée vers l'extrémité d'entrée du passage 101 du profilé. Une gorge 303, en arc de cercle centré sur l'axe du profilé, matérialisée sur le fond du flasque par une nervure 304 permet à l'eau de cheminer de façon à se répartir sur l'entrée du canal 101. Une autre gorge en arc de cercle 305 bordée par la nervure 306 matérialise un chemin pour que l'eau circule du canal 102 au canal 103 à l'extrémité inférieure du profilé. Une troisième gorge en arc de cercle 307 avec sa nervure 308 constitue un chemin pour que l'eau passe du canal 104 au canal 105 en bas du profilé.

De préférence les nervures 304,306,308 retiennent un joint plan plaqué sur la surface 309 du flasque et sur l'extrémité inférieure du profilé 1.

Dans une autre version, deux joints circulaires entourent l'un l'ensemble des chemins 303,305,307 et l'autre le tube chauffant 110. L'étanchéité entre les chemins 303,305,307 est alors simplement et suffisamment assurée par le plaquage des nervures 304,306,308 sur la face plane d'extrémité du profilé 1.

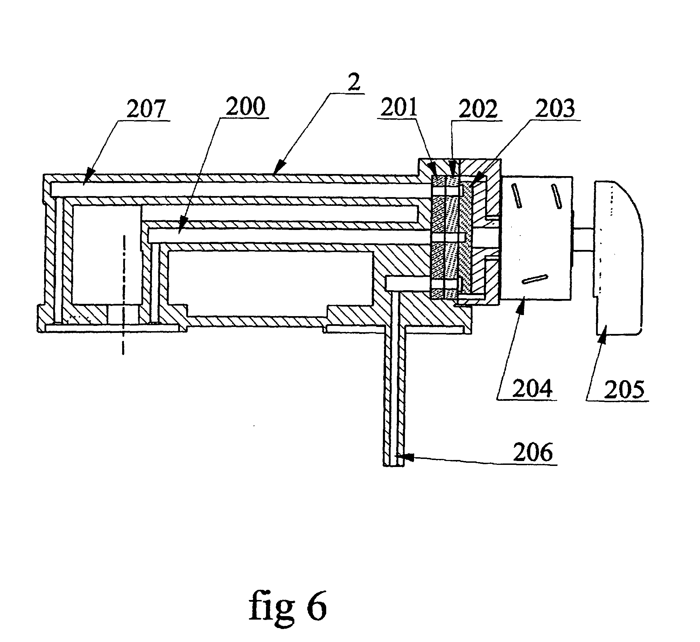

Des dispositions similaires du flasque supérieur 2 illustré sur la figure 6 conduisent l'eau du canal 101 au canal 102, du canal 103 au canal 104, et permettent la sortie du canal 105 vers l'utilisation par une conduite 200.

Le flasque 2 constitue le corps d'un distributeur comprenant un disque en matière élastique 201, un disque fixe en matière céramique 202 et un disque céramique 203 entraîné par un bouton 205. Le flasque supporte également un commutateur électrique 204. Les disques 201-203 sont percés et comportent des gorges qui permettent suivant la position du bouton 205 d'aiguiller l'eau chaude de la conduite 200 vers la mouture par la conduite 206 ou vers la purge, ou vers une buse de vapeur ou de fermer le circuit.

Avantageusement le profilé extrudé 1 comporte un canal 106 excentré par rapport à l'élément chauffant 110. Ce canal reçoit à sa partie inférieure l'eau de la pompe 7 via une conduite 310 du flasque inférieur 3. Le flasque supérieur 2 récupère cette eau peu réchauffée à cause de l'excentration, par une conduite 207 du distributeur. Dans une position du bouton 205 le circuit d'eau chaude est fermé et la conduite 207 est reliée à un orifice de remplissage du vérin 4. Dans d'autres positions du bouton 205 la conduite 207 est fermée ou mise à la purge.

Le profilé extrudé 1 comporte des passages 107,108 dont la section est fermée dans cette réalisation, mais qui pourrait aussi bien être partiellement ouverte de façon à faciliter les conditions d'extrusion. Ces passages reçoivent de préférence des vis auto-taraudeuses telles que 9 en bout du profilé pour la fixation des flasques. Ces passages sont de préférence excentrés par rapport à l'élément chauffant pour éviter d'ajouter de l'inertie thermique au corps de chauffe.

Le profilé comporte une rainure en T 114 dans laquelle sont agrippés des organes environnant immédiatement le corps de chauffe. Le corps du vérin 4 en particulier comporte une toile 8 dont un bord en T s'encastre dans la rainure 114. La rainure 114 peut également être utilisée pour la fixation du corps de chauffe dans la cafetière.

Le corps de chauffe comporte également un thermostat non représenté, lequel peut être fixé sur la rainure 114, mais de préférence on utilise un thermostat électronique dont le capteur est introduit dans la fente 111.

On voit que cette disposition d'un corps de chauffe permet une réalisation très simple et compacte en limitant au maximum le nombre de pièces d'étanchéité, et facilite l'assemblage des organes voisins.

La forme des flasques, à priori complexe, s'obtient en fait facilement par moulage de matière thermoplastique technique. Notamment, on retient comme matière plastique rigide alimentaire, un PPS (polysulfone de phénylène) commercialisé sous la dénomination "BR111" par la société Philips Pétroléum ou en alternative un PPO (polyoxyphénylène) modifié commercialisé sous la dénomination "Noryl GTX" par la société Général Electric.

L'un des aspects consiste notamment à prévoir dans les flasques des conduits à angle droits car réalisables par des broches pouvant s'emboîter à leur extrémité.

Lorsque le corps de chauffe est mis sous tension, l'élément chauffant échauffe le profilé extrudé 1 jusqu'à la température de consigne du thermostat. En agissant sur le bouton 205, l'utilisateur met la pompe en marche tout en fermant le circuit d'eau chaude. L'eau froide passe alors dans le flasque inférieur 3 par la conduite 310, puis le long du profilé dans le canal 106 où elle ne s'échauffe que très peu, l'élément chauffant 110 étant trop éloigné pour apporter la puissance thermique. Ensuite l'eau passe dans le flasque distributeur 2 dans la conduite 207 et elle est dirigée vers le vérin 4 où elle comprime la mouture.

En fin de compression, le distributeur peut être actionné pour fermer le circuit de vérin, et ouvrir le passage de l'eau depuis la pompe 7 par la conduite 302 du flasque inférieur et par les canaux 101-104 du profilé ou elle s'échauffe. L'eau étant distribuée autour de l'élément chauffant et faisant des allers-retours le long de cet élément avec des échanges thermiques entre les canaux, la température du profilé sans être totalement homogène reste bien plus uniforme que dans d'autres dispositions. En outre la disposition choisie permet une grande surface d'échange avec l'eau, une vitesse homogène de l'eau le long des surfaces d'échange ce qui diminue l'écart entre la température du profilé et la température d'utilisation de l'eau. La disposition du capteur de thermostat dépend moins du débit d'eau ce qui la rend moins délicate. Le tartre inclus dans l'eau ne se dépose pas dans des zones de dimensions restreintes et le corps de chauffe a une durée de vie supérieure. Après s'être échauffée l'eau traverse la conduite 200 du flasque supérieur 2 pour être dirigée vers l'utilisation.

En fin d'utilisation l'utilisateur agissant sur le bouton 205 arrête la pompe 7 et met les circuits d'eau chaude et froide à la purge.

## Revendications

1. Corps de chauffe, au sein d'un circuit hydraulique pour cafetière expresso comprenant un élément chauffant longitudinal (110), un circuit d'eau comportant un profilé extrudé (1) formant une pluralité de canaux parallèles adjacents (101-105) en relation thermique avec l'élément chauffant (110), **caractérisé en ce que** les canaux (101-105) sont répartis autour de l'axe longitudinal médian du profilé (1), coaxial à celui de l'élément chauffant (110), **en ce que** chaque extrémité du profilé (1) est fermée par un flasque (2,3), la face interne de chaque flasque (2,3) comportant des chemins (303,305,307) pour relier les canaux (101-105) entre eux, et assurant les entrée et sortie d'eau dans le profilé (1), et **en ce que** l'un au moins des flasques (2,3) comporte ou supporte un autre organe (7, 201, 202, 203) du circuit hydraulique de la cafetière qu'il relie hydrauliquement à au moins l'un des canaux du profilé.

2. Corps de chauffe selon la revendication 1 **caractérisé en ce que** le circuit d'eau dans le profilé comporte au moins un canal (101,103,105) où l'eau à chauffer circule à proximité de l'élément chauffant d'une première extrémité vers une deuxième extrémité et au moins un canal (102,104) où l'eau circule à l'inverse d'une deuxième extrémité vers une première extrémité, les deux canaux étant reliés par le chemin (303,305,307) d'un flasque à l'une des extrémités.

3. Corps de chauffe selon la revendication 2 **caractérisé en ce que** les canaux où la circulation de l'eau est de sens contraire se côtoient.

4. Corps de chauffe selon la revendication 2 **caractérisé en ce que** les chemins des flasques reliant les extrémités des canaux du profilé sont en arc de cercle centré sur l'axe médian du profilé.

5. Corps de chauffe selon la revendication 4 **caractérisé en ce que** les flasques comportent une surface de fond plane et les chemins sont entourés d'une nervure en saillie (304,306,308) de cette surface, laquelle nervure retient un joint s'appliquant d'une part sur la surface plane et d'autre part sur l'extrémité du profilé.

6. Corps de chauffe selon la revendication 4 **caractérisé en ce que** les chemins (303,305,307) sont ménagés dans l'épaisseur d'un flasque à partir d'une face interne plane.

7. Corps de chauffe selon l'une des revendications précédentes **caractérisé en ce que** les flasques (2,3) sont serrés sur l'extrémité du profilé (1) par des tirants ou des vis (9) logés dans des trous ou des passages (107,108) extrudés du profilé.

8. Corps de chauffe selon l'une des revendications précédentes **caractérisé en ce que** le profilé (1) comporte une rainure externe extrudée (114) ou une forme externe complémentaire à une rainure sur laquelle sont fixés d'autres éléments de la cafetière.

9. Corps de chauffe selon l'une des revendications précédentes **caractérisé en ce que** l'un des flasques (2) comprend le corps d'un distributeur reliant le circuit de l'eau à l'utilisation ou à la purge.

10. Corps de chauffe selon l'une des revendications précédentes **caractérisé en ce que** le flasque inférieur (3) relie la sortie d'eau de la pompe aux canaux d'eau du profilé.

11. Corps de chauffe selon l'une des revendications précédentes **caractérisé en ce que** le profilé (1) comprend un canal (106) de section fermée, excentré par rapport à l'élément chauffant (110) et parcouru par de l'eau froide peu ou pas réchauffée pendant son passage.

12. Corps de chauffe selon l'une des revendications précédentes **caractérisé en ce que** l'élément chauffant (110) est un tube chauffant électrique assemblé dans un logement (109) agencé sur l'axe médian du profilé (1), chaque flasque (2,3) présentant une ouverture traversante pour l'extrémité correspondante du tube chauffant (110).

13. Corps de chauffe selon la revendication 12 **caractérisé en ce que** le tube chauffant (110) est brasé sur le profilé.

14. Corps de chauffe selon la revendication 13 **caractérisé en ce que** le tube chauffant (110) est logé dans un passage central (109) du profilé (1) partiellement ouvert sur la longueur du profilé

15. Corps de chauffe selon la revendication 12 **caractérisé en ce que** la section du passage (109) contenant l'élément chauffant est fermée et comporte au moins une alvéole (112) permettant l'introduction d'un fil de brasure à la fabrication.

16. Corps de chauffe selon l'une des revendications 1 à 10 **caractérisé en ce que** l'élément chauffant (110) est une couche électriquement résistive épaisse ou mince déposée à la périphérie et le long du profilé (1) sur une couche (120) électriquement isolante.

17. Corps de chauffe selon l'une des revendications précédentes **caractérisé en ce que** un ou des canaux du profilé sont constitués de plusieurs passages hydrauliquement en parallèle.

18. Corps de chauffe selon l'une des revendications précédentes **caractérisé en ce qu'**il comporte un thermostat ou un capteur de température.

## Patentansprüche

1. Heizkörper innerhalb eines Hydraulikkreises für eine Espressomaschine mit einem Längsheizelement (110), einem Wasserkreis, der ein extrudiertes Profilteil (1) aufweist, das mehrere benachbarte, parallele Kanäle (101 - 105) in thermischer Beziehung mit dem Heizelement (110) bildet, **dadurch gekennzeichnet, daß** die Kanäle (101-105) um die mittlere Längsachse des Profilteils (1) koaxial zu derjenigen des Heizelements (110) verteilt sind, daß jedes Ende des Profilteils (1) durch einen Flansch (2, 3) geschlossen ist, wobei die Innenseite jedes Flansches (2, 3) Bahnen (303, 305, 307) aufweist, um die Kanäle (101 - 105) untereinander zu verbinden und den Eintritt und den Austrittt von Wasser in das Profilteil (1) gewährleistet, und daß wenigstens einer der Flansche (2, 3) ein weiteres Organ (7, 201, 202, 203) des Hydraulikkreises der Kaffemaschine aufweist oder hält, das er hydraulisch wenigstens mit einem der Kanäle des Profilteils verbindet.

2. Heizkörper nach Anspruch 1, **dadurch gekennzeichnet, daß** der Wasserkreis in dem Profilteil wenigstens einen Kanal (101, 103, 105), wo das zu erwärmende Wasser in der Nähe des Heizelements von einem ersten Ende zu einem zweiten Ende strömt, und wenigstens einen Kanal (102, 104) aufweist, wo das Wasser umgekehrt von einem zweiten Ende zu einem ersten Ende strömt, wobei die beiden Kanäle durch die Bahn (303, 305, 307) eines Flansches mit einem der Enden verbunden sind.

3. Heizkörper nach Anspruch 2, **dadurch gekennzeichnet, daß** die Kanäle, wo das Wasser in entgegengesetzter Richtung strömt, nebeneinanderliegen.

4. Heizkörper nach Anspruch 2, **dadurch gekennzeichnet, daß** die Bahnen der Flansche, die die Enden der Kanäle des Profilteils verbinden, in einem Kreisbogen liegen, der an der Mittelebene des Profilteils zentriert ist.

5. Heizkörper nach Anspruch 4, **dadurch gekennzeichnet, daß** die Flansche eine ebene Bodenfläche aufweisen und die Bahnen von einer vorspringenden Rippe (304, 306, 308) dieser Fläche umgeben sind, welche eine Dichtung hält, die einerseits auf die ebene Fläche und andererseits auf das Ende des Profilteils drückt.

6. Heizkörper nach Anspruch 4, **dadurch gekennzeichnet, daß** die Bahnen (303, 305, 307) in der Dicke eines Flansches ausgehend von einer ebenen inneren Fläche vorgesehen sind.

7. Heizkörper nach einem vorhergehenden Ansprüche, **dadurch gekennzeichnet, daß** die Flansche (2, 3) an dem Ende des Profilteils (1) durch Klammern oder Schrauben (9) eingespannt sind, die in extrudieren Löchern oder Durchgängen (107, 108) des Profilteils aufgenommen sind.

8. Heizkörper nach einem vorhergehenden Ansprüche, **dadurch gekennzeichnet, daß** das Profilteil (1) eine extrudierte äußere Rippe (114) oder eine zu einer Rippe komplementäre äußere Form aufweist, an welcher weitere Elemente der Kaffeemaschine befestigt sind.

9. Heizkörper nach einem vorhergehenden Ansprüche, **dadurch gekennzeichnet, daß** einer der Flansche (2) den Körper eines Verteilers aufweist, der den Wasserkreis mit der Verwendung oder dem Entlüften verbindet.

10. Heizkörper nach einem vorhergehenden Ansprüche, **dadurch gekennzeichnet, daß** der innere Flansch (3) den Wasserausgang der Pumpe mit den Wasserkanälen des Profilteils verbindet.

11. Heizkörper nach einem vorhergehenden Ansprüche, **dadurch gekennzeichnet, daß** das Profilteil (1) einen Kanal (106) mit geschlossenem Querschnitt aufweist, der bezüglich des Heizelements (110) exzentrisch ist und von kaltem Wasser durchströmt wird, das während seines Durchgangs gering oder nicht erwärmt wird.

12. Heizkörper nach einem vorhergehenden Ansprüche, **dadurch gekennzeichnet, daß** das Heizelement (110) ein elektrisches Heizrohr ist, das in einer Aufnahme (109) zusammengefügt ist, die an der Mittelachse des Profilteils (1) angeordnet ist, wobei jeder Flansch (2, 3) eine Eingangsöffnung für das entsprechende Ende des Heizrohrs (110 aufweist.

13. Heizkörper nach Anspruch 12, **dadurch gekennzeichnet, daß** das Heizrohr (110) an das Profilteil gelötet ist.

14. Heizkörper nach Anspruch 13, **dadurch gekennzeichnet, daß** das Heizrohr (110) in einem zentralen Durchgang (109) des Profilteils (1) aufgenommen ist, der über die Länge des Profilteils teilweise offen ist.

15. Heizkörper nach Anspruch 12, **dadurch gekennzeichnet, daß** der Querschnitt des das Heizelement enthaltenden Durchgangs (109) geschlossen ist und wenigstens eine Zelle (112) aufweist, die die Einführung eines Lötdrahts bei der Herstellung ermöglicht.

16. Heizkörper nach einem der Ansprüche 1 bis 10, **dadurch gekennzeichnet, daß** das Heizelement (110) eine dicke oder dünne resistive Schicht ist, die am Umfang und entlang des Profilteils (1) auf eine elektrisch isolierende Schicht (120) aufgebracht ist.

17. Heizkörper nach einem vorhergehenden Ansprüche, **dadurch gekennzeichnet, daß** ein Kanal oder Kanäle des Profilteils aus mehreren hydraulisch parallelen Durchgängen gebildet sind.

18. Heizkörper nach einem vorhergehenden Ansprüche, **dadurch gekennzeichnet, daß** er einen Thermostat oder einen Temperatursensor aufweist.

## Claims

1. A heater body within a hydraulic circuit for an espresso coffee machine, the heater body comprising a longitudinal heater element (110) and a water circuit including an extrusion (1) forming a plurality of adjacent parallel channels (101-105) in thermal relationship with the heater element (110), the body being **characterized in that** the longitudinal channels (101-105) are distributed around the mid-longitudinal axis of the extrusion (1), which lies on the same axis as the heater element (110), **in that** each end of the extrusion (1) is closed by an end plate (2, 3), the inside face of each end plate (2, 3) including paths (303, 305, 307) for interconnecting the channels (101-105), and enabling water to be enter and leave the extrusion (1), and **in that** at least one of the end plates (2, 3) includes or carries another member (7, 201, 202, 203) of the hydraulic circuit of the coffee maker which it connects hydraulically to at least one of the channels of the extrusion.

2. A heater body according to claim 1, **characterized in that** the water circuit in the extrusion comprises at least one channel (101, 103, 105) in which the water for heating flows close to the heater element from a first end towards a second end, and at least one channel (102, 104) in which the water flows in the opposite direction from a second end towards a first end, the two channels being interconnected by a path (303, 305, 307) in an end plate at one of the ends.

3. A heater body according to claim 2, **characterized in that** the channels in which the water flows in opposite directions are side by side.

4. A heater body according to claim 2, **characterized in that** the paths of the end plates interconnecting the ends of the channels in the extrusion are in the form of circular arcs centered on the mid-axis of the extrusion.

5. A heater body according to claim 4, **characterized in that** each end plate comprises a plane end surface and the paths are surrounded by a rib (304, 306, 308) projecting from said surface, which rib holds a gasket pressing firstly against the plane surface and secondly against the end of the extrusion.

6. A heater body according to claim 4, **characterized in that** the paths (303, 305, 307) are made in the thickness of an end plate starting from a plane inside face.

7. A heater body according to any preceding claim, **characterized in that** the end plates (2, 3) are clamped onto the ends of the extrusion (1) by ties or screws (9) received in extruded holes or passages (107, 108) of the extrusion.

8. A heater body according to any preceding claim, **characterized in that** the extrusion (1) includes an extruded external groove (114) or an external shape complementary to a groove on which other components of the coffee machine are fixed.

9. A heater body according to any preceding claim, **characterized in that** one of the end plates (2) comprises the body of a manifold connecting the water circuit to utilization or to purging.

10. A heater body according to any preceding claim, **characterized in that** the bottom end plate (3) connects the water outlet of the pump to the water channels of the extrusion.

11. A heater body according to any preceding claim, **characterized in that** the extrusion (1) includes a channel (106) of closed section that is off-center relative to the heater element (110) and that conveys cold water that is heated little or not at all as it passes through.

12. A heater body according to any preceding claim, **characterized in that** the heater element (110) is an electrical heater tube assembled in a housing (109) arranged on the mid-axis of the extrusion (1), each end plate (2, 3) having a through opening for the corresponding end of the heater tube (110).

13. A heater body according to claim 12, **characterized in that** the heater tube (110) is soldered to the extrusion.

14. A heater body according to claim 13, **characterized in that** the heater tube (13) is housed in a central passage (109) of the extrusion (1) that is open in part along the length of the extrusion.

15. A heater body according to claim 12, **characterized in that** the section of the passage (109) containing the heater element is closed and includes at least one cell (112) enabling solder wire to be inserted during manufacture.

16. A heater body according to any one of claims 1 to 10, **characterized in that** the heater element (110) comprises a thick or thin electrically resistive layer deposited on the periphery of and along the extrusion (1) on an electrically insulating layer (120).

17. A heater body according to any preceding claim, **characterized in that** one or more channels of the extrusion are constituted by a plurality of passages that are connected hydraulically in parallel.

18. A heater body according to any preceding claim, **characterized in that** it includes a thermostat or a temperature sensor.
